# EUROPEAN PATENT SPECIFICATION

(11) **EP 0 262 990 B1**
(45) Date of publication and mention of the grant of the patent: **13.04.1994**
(21) Application number: 87308783.7
(22) Date of filing: 02.10.1987
(51) Int. Cl.: G01S 15/88, G01S 7/52, G01F 23/28

(54) **Acoustic range finding system**
Akustisches Entfernungsmessungssystem
Système télémétrique acoustique

(30) Priority: 03.10.1986 US 916013; 22.04.1987 US 41877
(43) Date of publication of application: 06.04.1988
(73) Proprietor: MILLTRONICS LTD., Peterborough Ontario K9J 7B1 (CA)
(72) Inventor: Woodward, Steven J., Port Hope Ontario L1A 3R2 (CA)
(74) Representative: Newby, John Ross

(56) References cited:
- EP-A- 0 174 090
- DE-A- 3 418 486
- FR-A- 2 554 579
- US-A- 3 504 333
- US-A- 3 896 411
- US-A- 3 944 965
- US-A- 4 000 650
- US-A- 4 222 275
- US-A- 4 596 144

## Description

This invention relates to acoustic range finding systems of the type in which an electro-acoustic transducer transmits a pulse of acoustic energy towards a surface whose distance is to be measured, and subsequent signals received from the transducer are monitored to determine the temporal location of an echo from that surface.

In practice, problems arise in resolving the wanted true echo from other signals produced by the transducer or its connections. Our U.S. Patent No. 4,596,144 describes methods of detecting a true echo in an ultrasonic range finding system which are essentially of a statistical nature, and not only identify an echo resulting from a particular shot but are capable of quantifying the degree of assurance that a selected echo is a true echo. This latter information may be utilized in determining whether additional shots are required to provide reliable data.

All of the echo extraction techniques described in U.S. Patent No. 4,596,144 have the following steps in common:
1. An echo profile is formed by taking one or more shots, i.e., applying transmit pulses to the transducer, and recording a series of digitized samples of the received signal to form a database characterizing the echo profile;
2. The first part of the echo profile is blanked in order to cover over the transmit pulse and some transducer ringing. In order to obtain acceptable efficiency, the transducer must have a reasonably high quality factor or Q, and this results in an exponentially decaying oscillation of the transducer which continues after the end of the transmit pulse and initially forms the major portions of the transducer output to a receiver which processes the transducer output. Although the start of the echo profile coincides with the start of the transmit pulse, the useful echo information occurs after the end of blanking;
3. A reference curve is formed. The curve starts at a fixed start point and then follows the profile;
4. The most probably correct echo is selected by comparing the echo profile with the reference curve.

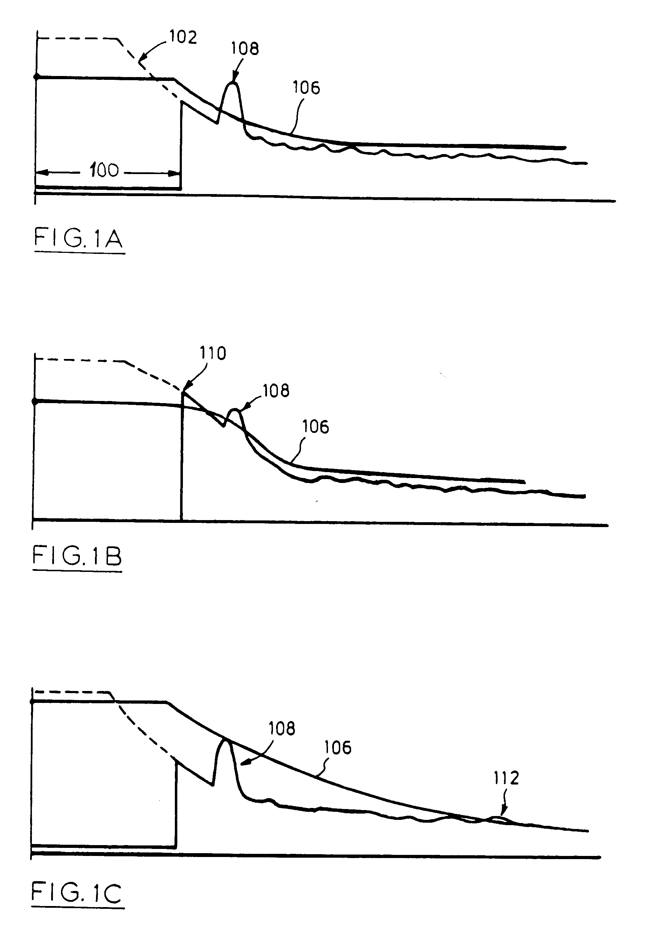

Certain problems arise in the application of these techniques. The problems are illustrated in Figures 1A, 1B and 1C, which are graphs illustrating the processing of signals received by a transducer following a shot.

Firstly, it is desirable to set the start point of the reference curve 106 low in order to confidently detect valid close-in echoes 108 (see Figure 1A). On the other hand it is desirable to set the start point high so that the reference curve will clear the unblanked portion 110 of the transducer ringing following the blanked portion 102, otherwise the ringing may be deemed to be the correct echo in step 4 (see Figure 1B).

In the apparatus described in U.S. Patent No. 4,596,144, the start point may be set manually by entering a value from the keyboard, or automatically. To set the start point automatically, the operator must first ensure that the material level is well down from the transducer, and then by use of the keyboard instruct the computer to calculate a start point which will cause the reference curve to clear the transducer ringing following the blanking interval 100. The start point cannot be set with a full bin because the valid close-in echo may appear to be transducer ringing and the start point would be set high to clear this echo 108 (see Figure 1C), with resultant detection of a spurious echo 112.

A further problem arises because of variations in transducer ringing. The ringing may increase for the following reasons:
1. An increase or decrease in temperature.
2. A change in the mounting of the transducer; for example, the mounting bolts of the transducer may be tightened.
3. Natural aging of the transducer.
4. Replacement of the transducer.

The operator must recognize these factors and set the start point high enough to clear the worst case of expected ringing. If the start point is too high then valid close-in echoes will not be detected. If the start point is set too low then the apparatus may initially operate correctly, but a change of season will probably cause an increase in ringing and the start point must then be increased. If a compromise cannot be achieved then the blanking interval 100 must be increased so that less of the ringing is seen. The disadvantage of increasing the blanking is that levels in the top portion of the bin cannot be measured, and the useful height of the bin is thus reduced.

Furthermore, the fact that transducer performance may vary within a wide range, and that connections to the transducer may pick up electrical noise, makes it difficult reliably to detect defective transducers or transducer wiring.

In transmitter design a trade off is made in selecting the transmit pulse width. A narrow pulse width has the effect of shifting the ringing to the left, when viewed graphically, simply because the end of transmission occurs sooner. The position of the echo remains the same and therefore close-in echoes will stand out more above the ringing. A wide transmit pulse has the effect of producing the largest possible return echo, even in the presence of air currents which tend to disperse the sound wave, as often happens with distant targets.

Much effort has been directed to improving transducer performance, but in the present state of the art it is not possible to consistently manufacture a transducer with low and stable ringing while still maintaining other desirable features such as high sound output and rugged construction.

Although reliable operation throughout the full height of a bin is important, operation in the top region of the bin is frequently considered to be critical. A failure to indicate the correct level in the top region could result in the bin being overfilled.

A solution to the above problems would this be highly desirable.

Objects of this aspect of the present invention thus include the ability to relieve an operator from any involvement in setting the start point or similar parameter, the ability to have the system continuously and automatically compensate for changes in transducer ringing, the ability to automatically adjust the operation of the system so that close-in echo detction is improved without compromising far echo detection, and the ability to detect defective or absent transducers or transducer connections.

We have found that it is possible to make effective use of the initial portion of the transducer response to overcome these problems, by extending the recorded series of digitized samples so as to represent essentially the entire receiver response to a transmit pulse rather than excluding the initial portion which was previously not considered useful because it mainly comprises signals generated by high amplitude ringing of the transducer.

EP-A-0174090 discloses a pulse echo ranging system in which a return echo signal is combined with a previously generated threshold signal prior to the detection of echoes. The threshold signal is prepared by digitizing and manipulating echo signals, and isolating portions attributable to ringing and spurious echoes, the threshold signal thus produced being converted back to an analog signal and combined with an echo signal to be processed, so as to eliminate unwanted components.

In the following claims 1 and 5 the preamble is based on the aforesaid US-A-4596144.

According to the invention, there is provided an acoustic ranging system comprising at least one electro-acoustic transducer directed towards the surface of material whose level is to be determined, a transmitter to transmit pulses of high frequency electrical energy to energize selectively each said transducer whereby to cause it to emit at least one shot of high frequency sound, a receiver receiving and amplifying electrical energy from said at least one shot regenerated by said transducer over a subsequent period, the time lapse after a shot before receipt by said receiver of energy regenerated from an echo from said surface being proportional to the distance of the origin of the echo, signal processing means comprising analog to digital converter means to sample repeatedly the output amplitude of the signal from the receiver at defined intervals and to digitize the samples; memory means to store an extended sequence of digitized samples so produced in respect of at least one shot and form therefrom a digital data base depicting an amplitude/time profile of the received signal with a resolution dependent on the sampling intervals; means to utilize the amplitude profile depicted by the data in said data base to help isolate relative to a time axis a portion of the output signal produced by at least one shot deemed most probable to correspond to a wanted echo; and means to determine a range represented by an echo within said portion of the time axis; characterized in that the transmitter and receiver are configured so that the receiver is saturated by electrical energy from each pulse from said transmitter, and in that said sequence of digitized samples includes an initial portion in which the receiver is so saturated.

The availability of the initial portion of the received signal enables several advantages to be obtained. Firstly, a simple test as to the presence of high amplitude signal samples during this initial portion will verify proper operation of the transducer, since no signals which might otherwise be present will be comparable in magnitude with the high amplitude ringing of the transducer which occurs immediately following termination of the transmit pulse.

Secondly, and desirably, the transmit pulse will saturate the receiver if the latter is active during the transmit pulse, thus producing signal samples at a reference output level from the latter from which the values of subsequent signal samples must necessarily decline, thus automatically setting a start point for the echo profile.

Thirdly, a separate test may be made of the samples forming the initial portion of the echo profile, thus enabling even very short range echoes to be detected. During this initial portion, in which the amplitude component of successive samples due to transducer ringing will be declining steeply, it may normally be assumed that any significant upturn in the echo profile can only represent a true echo. In the event that this separate test reveals no echo, then either the remaining portion of the echo profile may be tested for the presence of echoes as described in U.S. Patent No. 4,596,144, or a further shot may be taken using a broader transmit pulse so as to improve the resolution of distance echoes.

The invention is described further with reference to the accompanying drawings, in which:
Figures 1A, 1B and 1C, already described above, are graphical representations of problems associated with blanking of transducer response in acoustic ranging systems;
Figure 2 is a block schematic diagram of a system in accordance with the invention;
Figure 3 is a flow diagram of a part of the echo processing routine utilized by the system; and
Figures 4A, 4B and 4C are graphical representations illustrating the processing of echo responses in accordance with the invention.

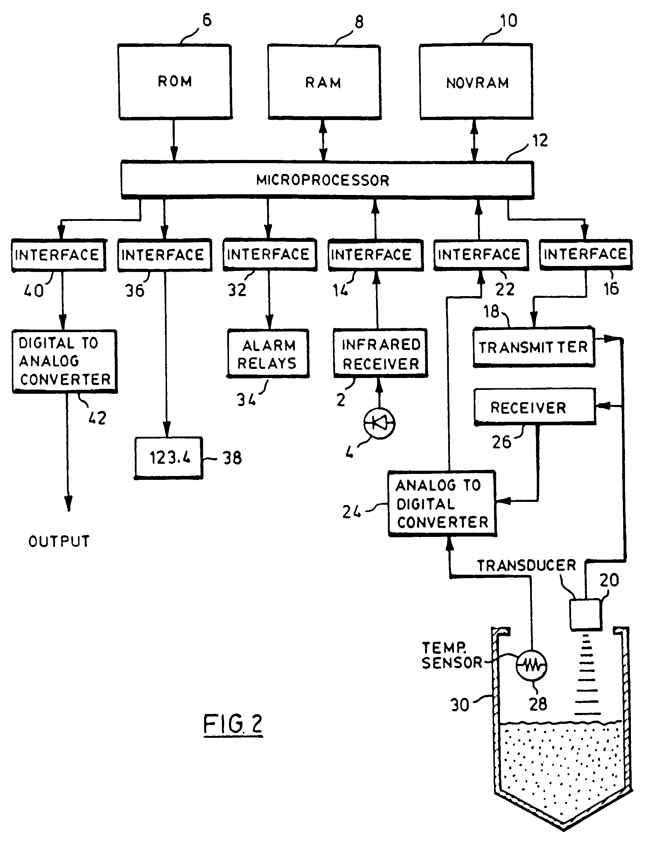

Referring to Figure 2, the diagram shown of a computer unit is a simplified version of that shown in Figure 1 of U.S. Patent No. 4,596,144, with the difference that the keyboard 52 and control keys 58 of that patent are replaced by an infrared receiver 2 associated with an infrared sensor diode 4, and the division of the memory in three rather than two parts, read only memory 6, random access memory 8 and non-volatile memory 10. The non-volatile memory may be implemented by a conventional RAM with battery backup, or implemented by RAM chips with integral battery backup, or by electrically alterable and erasable read only memory, or magnetic bubble memory or any other suitable technology combining the ability to retain memory content under power down conditions with the ability to alter memory content under program control. The non-volatile memory, referred to for convenience as NOVRAM, is utilized for retaining constants which are dependent on a particular installation or configuration or which only require alteration at long intervals, such as configuration and calibration data.

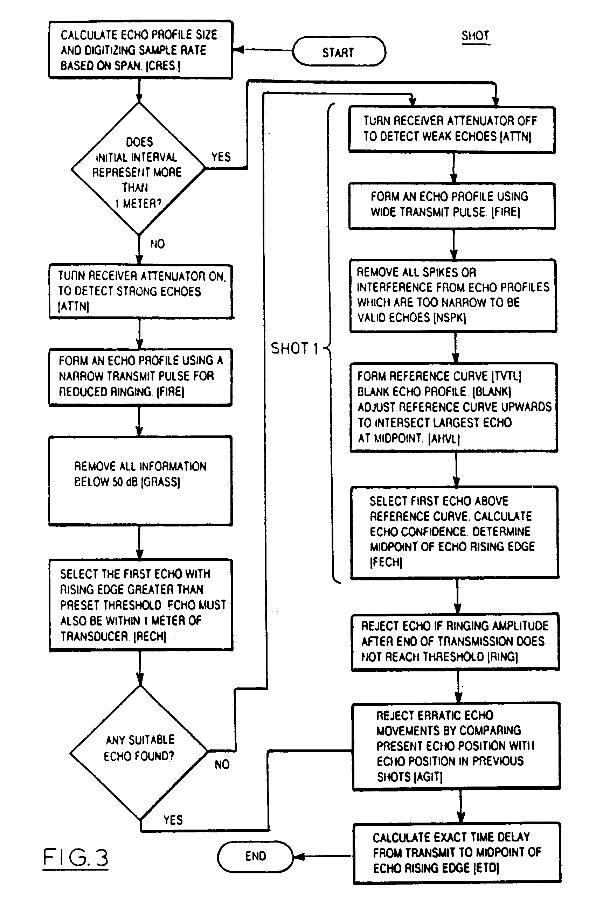

The read only memory 6 contains a predetermined program which controls a microprocessor 12, which in turn utilizes the random access memory 8 for working memory and temporary storage of variable data, whilst constants other than those predetermined by the program itself are stored in the NOVRAM 10. The main portion of the program itself may be essentially as described in U.S. Patent No. 4,596,144 except for amendment to segregate the data addresses utilized appropriately between the memories 8 and 10, and any revision of the routines associated with an interface 14 to the receiver 2 so as to suit it to receive data from such a source rather than a keyboard or control keys. The program is however further developed as set forth below with reference to Figure 3, so as to further improve echo detection performance.

Further interfaces are provided to various other microprocessor peripherals. An interface 16 is provided to a transmitter 18 sending pulses to an external ultrasonic transducer 20, and interface 22 with an analog to digital converter 24 receiving return signals from the transducer 20 via a receiver 26, and from an external temperature sensor 28. The transducer 20 and sensor 28 are appropriately mounted in relation to a bin or silo 30 which is being monitored. An interface 32 is provided to an alarm relay unit 34, which may drive alarm indicator lamps and possible external alarm devices, whilst an interface 36 drives a digital display 38. A further interface 40 drives a digital to analog converter and current source serial data transmitter 42. Whilst the various interfaces have been shown as separate functional blocks, it will be understood that they may be implemented by a lesser number of physical interface circuits providing multiple ports, or may be integrated either into the peripheral circuit which they interface or into a micro-computer which may incorporate the microprocessor 12 and all or part of the memories 6 and 8.

The diode 4 associated with the receiver 2 can receive modulated data from infrared source diode driven by a coding circuit, which causes the diode to emit different pulse trains according to which key of a number of keys on a separate keypad has been depressed. The diode, encoder, a battery powering the circuit, and the keypad, are incorporated into a small portable calibrator unit which may be constructed similarly and utilizing similar devices, to the infrared remote control units widely used to control domestic appliances such as television sets. It should be understood however, as discussed further below, that the unit is not utilized as a remote control unit in the usual sense. The receiver 2 and diode 4 may also be similar to those utilized in remote control receivers and providing digital outputs responsive to key presses applied to a keypad on a transmitter.

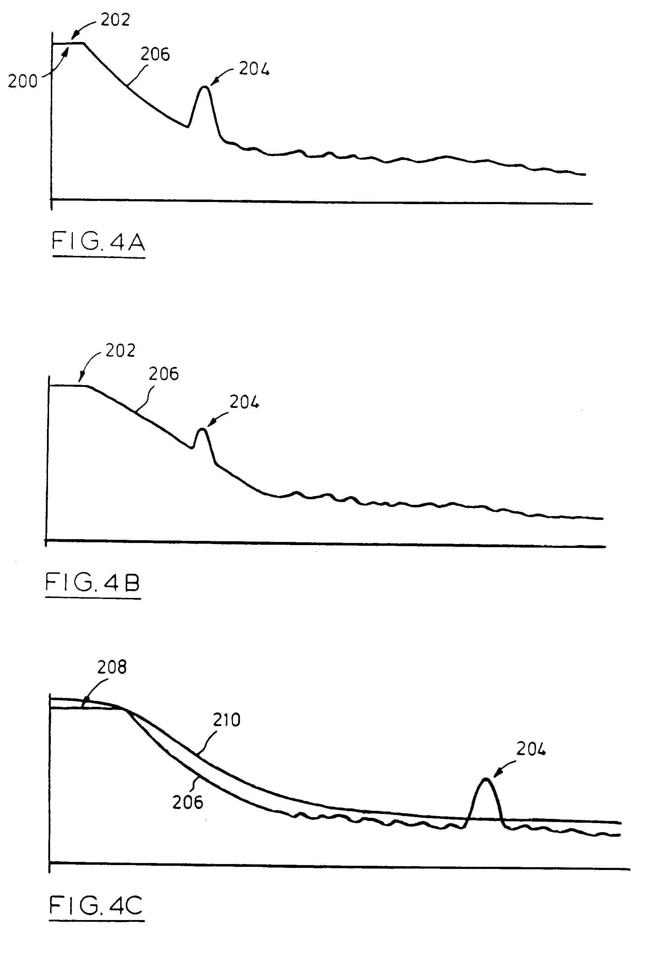

In the present system, the problems discussed with reference to Figures 1A, 1B and 1C are overcome, as illustrated by reference to Figures 4A, 4B and 4C. In Figures 4A, a first short is taken using an initial short transmitted pulse 200, no blanking being utilized. Instead of blanking, a similar effect is achieved by allowing a receiver 26 associated with the transducer 20 to saturate during a transmit pulse from the transmitter 18. The saturation level 202 of the receiver can then determine the start level of the reference curve, if such is utilized, although in many cases detection of an echo 204 in the first portion of the received signal 206 may be adequately achieved merely by examining this portion for any upturn in the amplitude of the received signal, on the premise that the amplitude of ringing will be dropping sufficiently rapidly over the first portion of the curve that only a wanted echo will have sufficient amplitude to reverse the falling trend. Any change in the amplitude of ringing will neither change the saturation level nor significantly affect the validity of the premise; thus in Figure 4B the level of ringing has increased, but the wanted echo can still be detected. In some cases, for example where a very strong spurious echo occurs in the first portion of the received signal, some alternative echo identification technique may be necessary; for example blanking of some form may be necessary to eliminate the unwanted echo. If blanking is used, the echo search simply begins at the point in the profile where the blanking would end, the echo profile itself remaining unblanked.

Once the initial portion of the received signal has been tested for the presence of a wanted echo, the shot sequence is complete if a wanted echo has been detected. If no wanted echo has been detected, a second shot is taken using a wider transmit pulse, a first portion of the received signal is disregarded, and the remainder tested for a wanted echo. Since a portion of the signal equivalent to that now disregarded has already been tested for a wanted echo, the portion 208 (see Figure 4C) may be disregarded, thus ensuring that ringing of the transducer has been considerably attenuated even at the commencement of the portion of the signal being analyzed. This facilitates choice of a suitable starting point for a reference curve 210 utilized to select a wanted echo 204.

The exemplary signal processing procedure SHOT shown in Figure 3 will now be described in more detail.

By calling a subroutine CRES, the size of sample file or data base to be formed from the received signal is calculated, based upon the range span and resolution required. The range span and resolution parameters are stored in NOVRAM or RAM and are fetched utilizing an appropriate subroutine. A test is then made of whether an initial interval 208 is greater than 5.76 ms, equivalent to a 1 metre range. If the answer is affirmative, a jump is made to routine SHOT 1, described later. Otherwise the subroutine ATTN is called which turns on an attenuator in the receiver 26 to suit its response, to strong echoes. Subsequently a subroutine FIRE is called which causes the transmitter to fire a pulse, the duration of which is determined by a parameter (in this case 8) passed in register A of microprocessor 12, and which causes the received signal to be digitized by converter 24. Since only a first portion of the received signal is of interest, only samples relating to this portion are stored in RAM by the subroutine FIRE so as to form a first file.

The first file is then truncated by the subroutine GRASS to remove data following the point at which the signal level falls below 50 dB, and transferred to a second file where it is processed by the subroutine RECH to select the first echo with a rising edge greater than an amount set by a parameter stored in NOVRAM, and to return in various registers the elapsed time to the echo and various parameters of the echo, and the confidence level that a wanted echo has been detected. The confidence level in this instance is considered to be the height of the rising edge of the echo, provided that the echo peak has a predetermined minimum amplitude and the elapsed time corresponds to a range less than 1 metre, failing which a confidence level of zero is returned, indicating failure to detect a wanted echo. A test is then made to determine whether a suitable echo was found, failing which execution jumps to subroutine SHOT 1. If an echo was detected, execution jumps to label AGIT discussed further below.

In routine SHOT 1, the subroutine ATTN is again called, but with a different parameter so as to disable the receiver attenuator since the signals of interest will be at a lower level. The subroutine FIRE is called, also with passage to a different parameter (40) corresponding to a much longer transmit pulse, in this example five times longer than the short pulse, and an extended range of samples corresponding to the full required span is stored in the first file by the subroutine FIRE. The stored data is then filtered by the subroutine NSPK to remove spikes and interference from the data which are of too short a duration to represent valid echoes, and transferred to the second file. A reference curve is then formed in the second file utilizing the data from the second file to determine a start point and then form a smoothed curve from which echo information has been filtered by forming running averages of groups of successive samples. The second file is then reloaded with the data from the first file, and a first portion of the data is blanked by subroutine BLANK, whereafter the reference curve is then shifted upwardly by a subroutine AHVL so that it intersects the largest echo at midpoint. Thereafter a subroutine FECH selects the earliest echo of sufficient amplitude extending above the reference curve, returning similar data in the same registers as those used by the subroutine RECH. In this context, "sufficient amplitude" may be some fraction, typically half, of the amplitude of the largest echo. In this instance the confidence level is considered to be the difference between the selected echo and the next largest echo. In no valid echo is detected, the confidence level is zero.

A call is then made to a subroutine RING. This subroutine tests the amplitude of the echo profile stored in memory at a predetermined interval after the commencement of the transmit pulse. In the example being considered, the transmit pulse is 1 millisecond wide, and the amplitude is tested 2 milliseconds after the commencement of the pulse, i.e. 1 millisecond after the end of the pulse, these timings being of course exemplary. If the stored amplitude which is tested fails to reach a certain threshold level, certain variables are set to zero to indicate that the results of that shot should be ignored and that the transducer to which the transmit pulse was applied is probably defective or out of circuit. With an operative transducer, the effect of the transmit pulse will be to produce an initially rapidly decaying "ringing" of the transducer, which must have a fairly high Q in order to provide reasonable efficiency of operation. By testing the amplitude of the received signal a predetermined time after the end of the transmit pulse, the presence of a normal amplitude of ringing can be verified. The timing of the test is preferably such that it is sooner than any echo could normally be expected, and before the ampitude of the ringing has dropped to a level at which it is comparble to noise that may occur in the received signal.

Whilst known ultrasonic level systems frequently incorporate means indiciate "loss of echo", such loss of echo may arise from various causes such as high noise levels during filling of containers, inability to select between multiple echoes, and short or open circuit faults in the transducer or its connecting cable due to failure or physical damage. Not only are existing systems unable to discriminate between possible causes of loss of echo, but the case of an open or short circuit transducer fault, the connecting cable may still pick up noise which may be mistaken for echoes. This problem is more severe with open circuit faults, but can also occur with short circuit faults in transducers used to monitor low level echoes through long cables.

The ringing amplitude test described above permits reliable detection of open or short circuit faults, since ringing will be absent or of much reduced amplitude, thus making the loss of echo indication more reliable, and providing warning of faults. In a multipoint scanning system, the test will automatically determine which points have operative transducers, thus enabling transducers to be brought into and taken out of service without reprogramming.

A subroutine AGIT is then called which stores the echo parameters passed by the subroutine RECH or FECH, and tests the validity of the data. If the confidence level is zero, then previous echo data is retained, and the stored confidence level is set to zero. Otherwise, the echo position is tested against a window containing a previously stored echo position (or such a window is formed if necessary from the new echo), and parameters representing confidence level, echo position, window duration and window starting point are updated in RAM if necessary. The echo time delay is then calculated by subroutine ETD and stored as a further parameter to complete the routine.

According to the confidence level obtained and other factors, the SHOT routine may then be repeated if necessary, as set forth in U.S. Patent No. 4,596,144.

It will be understood that the hardware and routines described are exemplary only of those that may be utilized to implement the invention as set forth in the appended claims.

For example, the SHOT 1 routine may advantageously be utilized with a medium length transmitted pulse, even without the preceding use of a short pulse if rapid operation is important. The SHOT 1 routine is particularly useful in isolating valid echoes in liquid level measurements in tanks where reflections may occur between the liquid and the top of the tank. Furthermore, even if the short pulse routine produces an apparently valid echo, the SHOT 1 routine could be utilized, and if that too produces an apparently valid echo, then a determination could be made as to which was the true echo. This technique may be useful when structural features of the enclosure being monitored tend to result in spurious short range echoes.

Moreover, the SHOT routine may be utilized with a single transmitted pulse, with the subroutine ATTN deleted and the subroutine FIRE omitted from the SHOT 1 routine. The principal advantage of using an initial short transmitted pulse to test for short range echoes is that a short pulse advances the point in time at which transducer ringing begins to decay, thus simplifying echo detection at very short ranges. In many applications, a single medium length shot may provide adequate performance, particularly if the sample data base collected in the first file is processed in two stages as described.

## Claims

1. An acoustic ranging system comprising at least one electro-acoustic transducer (20) directed towards the surface of material whose level is to be determined, a transmitter (18) to transmit pulses of high frequency electrical energy to energize selectively each said transducer whereby to cause it to emit at least one shot of high frequency sound, a receiver (26) receiving and amplifying electrical energy from said at least one shot regenerated by said transducer over a subsequent period, the time lapse after a shot before receipt by said receiver of energy regenerated from an echo from said surface being proportional to the distance of the origin of the echo, signal processing means comprising analog to digital converter means (24) to sample repeatedly the output amplitude of the signal from the receiver at defined intervals and to digitize the samples; memory means (8) to store an extended sequence of digitized samples so produced in respect of at least one shot and form therefrom a digital data base depicting an amplitude/time profile of the received signal with a resolution dependent on the sampling intervals; means to utilize the amplitude profile depicted by the data in said data base to help isolate relative to a time axis a portion of the output signal produced by at least one shot deemed most probable to correspond to a wanted echo; and means to determine a range represented by an echo within said portion of the time axis; **characterized in that** the transmitter (18) and receiver (26) are configured so that the receiver (26) is saturated by electrical energy from each pulse from said transmitter (18) and in that said sequence of digitized samples includes an initial portion in which the receiver (26) is so saturated.

2. A system according to Claim 1, characterised by means (RING) to test the amplitude of a sample derived from said initial portion a predetermined interval after a shot, whereby to verify the presence of ringing of the transducer (20).

3. A system according to Claim 1 or claim 2, characterised in that said memory means (8) is adapted to store samples of the receiver output occurring during said shot, and the receiver (26) is saturable by the transmitter (18).

4. A system according to any preceding Claim, characterised in that the transmitter (18) is adapted to transmit both shorter pulses and longer pulses, and means (24) are provided to derive samples of said initial portion from energy regenerated by said transducer (20) from a short pulse, and to derive samples of the remainder of the receiver response from energy regenerated by said transducer (20) from a longer pulse.

5. A method of acoustic ranging in which a pulse of acoustic energy is transmitted from a transducer (20) which is also utilized to receive an echo reflected from the surface of material whose level it is desired to detect, and in which a profile of the variation of the output of the transducer with time following the pulses is stored and examined in order to detect the echo, characterized in that the profile includes a period immediately following the transmission of the pulse during which the transducer (20) is ringing at a high amplitude as a result of transmission of said pulse.

6. A method according to Claim 5, characterized in that the transducer output is amplified by a receiver (26) prior to examination, the dynamic range of the receiver being such that its output is saturated during transmission of each pulse, this level providing a starting point for examining the echo profile for echo anomalies.

7. A method according to Claim 5 or 6, characterized in that a profile is obtained using a narrow transmitted pulse, and a first portion of that profile is examined for the presence of an anomaly representing the echo, and if no echo is detected in said first portion, a further profile is obtained using a broader transmitted pulse, a first portion of the echo profile is discarded, and the remainder is examined for the presence of an anomaly representing the echo.

8. A method according to Claim 7, characterized in that the transducer output following the narrow pulse is examined by searching the echo profile for an upturn of predetermined minimum amplitude.

9. A method according to any of claims 5 to 8, characterized in that the transducer output is amplified by a receiver (26) having a logarithmic transfer characteristic, the receiver output is digitized to form a file of data samples, the further profile as represented by the samples is examined by forming a reference curve by digital filtering of the digitized data samples, the reference curve is shifted, by addition of a constant to its samples, above the echo response so as to intersect the largest echo anomaly, and the first echo anomaly in the echo response which intersects the reference curve is deemed the wanted echo.

10. A method according to Claim 9, characterized in that the difference in amplitude between the selected anomaly and the next largest anomaly is stored as a parameter representing the degree of confidence that the correct echo anomaly has been selected.

11. A method according to any of claims 5 to 10, characterized in that the amplitude of ringing of an electrical signal generated by the transducer (20) excited by said transmit pulse is tested following termination of the transmit pulse to verify normal operation of the transducer.

12. A method according to Claim 11, characterized in that a sequence of samples of signals from the transducer (20) are digitized and stored, and wherein a sample from a specific position in said sequence is tested to verify the amplitude of ringing of the transducer at that point in the sequence, the sample being selected so that the amplitude of ringing of a functional transducer will be high compared to any anticipated noise signal.

13. A method according to Claim 12, characterized in that signals from a plurality of transducer inputs are monitored, the presence or absence of ringing of predetermined amplitude in the selected sample of signals received from a particular input being utilized to determine whether a transducer is present at that input.

## Patentansprüche

1. Akustisches Entfernungsmeßsystem mit mindestens einem elektroakustischen Wandler (20), der auf die Materialoberfläche gerichtet ist, dessen Höhe zu messen ist, einem Sender (18) zum Aussenden von Impulsen hochfrequenter elektrischer Energie zur gezielten Erregung des jeweiligen besagten Wandlers, um ihn damit zu veranlassen, mindestens einen Schuß hochfrequenten Schalls abzugeben, einem Empfänger (26), der elektrische Energie von dem besagten mindestens einem Schuß, die vom besagten Wandler über eine nachfolgende Zeitspanne regeneriert worden ist, empfängt und verstärkt, wobei der Zeitablauf nach einem Schuß vor Empfang der aus einem Echo von der besagten Oberfläche regenerierten Energie durch den besagten Empfänger zur Entfernung des Ursprungs des Echos proportional ist, Signalverarbeitungsmitteln mit Analog-Digitalwandlern (24) zum wiederholten Abtasten der Ausgangsamplitude des Signals vom Empfänger in definierten Zeitabständen und zur Digitalisierung der Abtastwerte; Speichermitteln (8) zum Speichern einer erweiterten Folge derart hinsichtlich mindestens eines Schusses hergestellter digitalisierter Abtastwerte und Bilden aus diesen einer ein Amplituden-Zeit-Profil des empfangenen Signals mit einer von den Abtastabständen abhängigen Auflösung darstellenden digitalen Datenbank; Mitteln zur Verwertung des durch die Daten in der besagten Datenbank dargestellten Amplitudenprofils, um mit dessen Hilfe einen Teil des durch mindestens einen Schuß erzeugten Ausgangssignals, welcher Schuß als einem gewünschten Echo am wahrscheinlichsten entsprechend erachtet wird, relativ zu einer Zeitachse abzutrennen; und Mitteln zum Bestimmen eines durch ein Echo innerhalb des besagten Teils der Zeitachse dargestellten Bereichs, dadurch gekennzeichnet, daS der Sender (18) und Empfänger (26) so aufgebaut sind, daS der Empfänger (26) durch elektrische Energie von jedem Impuls vom besagten Sender (18) gesättigt wird, und daS die besagte Folge digitalisierter Abtastwerte einen Anfangsteil enthält, in dem der Empfänger (26) derart gesättigt ist.

2. System nach Anspruch 1, gekennzeichnet durch Mittel (RING) zum Prüfen der Amplitude eines Abtastwerts, der eine vorbestimmte Zeit nach einem Schuß vom besagten Anfangsteil abgeleitet worden ist, um damit das Vorhandensein von Nachschwingen des Wandlers (20) nachzuweisen.

3. System nach Anspruch 1 oder Anspruch 2, dadurch gekennzeichnet, daß das besagte Speichermittel (8) zum Speichern von Abtastwerten der Ausgabe des Empfängers, die während des besagten Schusses auftreten, angeordnet ist, und daß der Empfänger (26) vom Sender (18) sättigbar ist.

4. System nach einem der vorhergehenden Ansprüche, dadurch gekennzeichnet, daß der Sender (18) zum Senden von sowohl kürzeren Impulsen als auch längeren Impulsen angeordnet ist, und daß Mittel (24) zur Ableitung von Abtastwerten vom besagten Anfangsteil aus vom besagten Wandler (20) von einem kurzen Impuls regenerierter Energie und zur Ableitung von Abtastwerten vom Rest der Empfängerreaktion aus vom besagten Wandler (20) von einem längeren Impuls regenerierter Energie vorgesehen sind.

5. Verfahren zur akustischen Entfernungsmessung, in dem ein Impuls akustischer Energie von einem Wandler (20) ausgesandt wird, der auch zum Empfangen eines von der Materialoberfläche mit deren Höhe erkannt werden soll, reflektierten Echos angewandt wird, und wobei ein Profil des zeitlichen Verlaufs der Ausgabe des Wandlers nach den Impulsen gespeichert und untersucht wird, um das Echo zu erkennen, dadurch gekennzeichnet, daß das Profil einen dem Aussenden des Impulses unmittelbar folgenden Zeitraum enthält, während dem der Wandler (20) als Ergebnis des Aussendens des besagten Impulses mit hoher Amplitude nachschwingt.

6. Verfahren nach Anspruch 5, dadurch gekennzeichnet, daß die Wandlerausgabe vor Untersuchung durch einen Empfänger (26) verstärkt wird, wobei die Empfängerdynamik so beschaffen ist, daß die Ausgabe des Empfängers während des Aussendens jedes Impulses gesättigt ist und dieser Pegel einen Anfangspunkt für die Untersuchung des Echoprofils nach Echoabnormalitäten bietet.

7. Verfahren nach Anspruch 5 oder 6, dadurch gekennzeichnet, daß ein Profil mit einem schmalen Sendeimpuls erhalten wird und ein erster Teil dieses Profils nach dem Vorhandensein einer das Echo darstellenden Abnormalität untersucht wird, und wenn im besagten ersten Teil kein Echo erkannt wird, ein weiteres Profil mit einem breiteren Sendeimpuls erlangt wird, ein erster Teil des Echoprofils verworfen wird und der Rest auf das Vorhandensein einer das Echo darstellenden Abnormalität untersucht wird.

8. Verfahren nach Anspruch 7, dadurch gekennzeichnet, daß die Wandlerausgabe nach dem schmalen Impuls durch Durchsuchen des Echoprofils nach einem Ansteigen der vorbestimmten Mindestamplitude untersucht wird.

9. Verfahren nach einem der Ansprüche 5 bis 8, dadurch gekennzeichnet, daß die Wandlerausgabe durch einen Empfänger (26) mit einer logarithmischen Übertragungskennlinie verstärkt wird, die Empfängerausgabe digitalisiert wird, um eine Datei von Datenabtastwerten zu bilden, das durch die Abtastwerte dargestellte weitere Profil untersucht wird, indem eine Bezugskurve durch digitales Filtern der digitalisierten Datenabtastwerte gebildet wird, die Bezugskurve durch Hinzufügung einer Konstanten zu ihren Abtastwerten über die Echoantwort verlagert wird, um die größte Echoabnormalität zu schneiden, und die erste, die Bezugskurve schneidende Echoabnormalität in der Echoantwort als das gewünschte Echo erachtet wird.

10. Verfahren nach Anspruch 9, dadurch gekennzeichnet, daß der Amplitudenunterschied zwischen der ausgewählten Abnormalität und der nächstgrößten Abnormalität als ein Parameter gespeichert wird, der einen Überzeugungsgrad, daß die richtige Echoabnormalität ausgewählt worden ist, darstellt.

11. Verfahren nach einem der Ansprüche 5 bis 10, dadurch gekennzeichnet, daß die Nachschwingamplitude eines von dem Wandler (20) erzeugten elektrischen Signals, die vom besagten Sendeimpuls erregt worden ist, nach Abschluß des Sendeimpulses geprüft wird, um die normale Funktionsweise des Wandlers nachzuweisen.

12. Verfahren nach Anspruch 11, dadurch gekennzeichnet, daß eine Folge von Abtastwerten von Signalen vom Wandler (20) digitalisiert und gespeichert werden, und wobei ein Abtastwert von einer bestimmten Stelle in der besagten Folge geprüft wird, um die Nachschwingamplitude des Wandlers an dieser Stelle in der Folge nachzuweisen, wobei der Abtastwert so ausgewählt wird, daß die Nachschwingamplitude eines funktionsfähigen Wandlers im Vergleich zu jedem erwarteten Rauschsignal hoch sein wird.

13. Verfahren nach Anspruch 12, dadurch gekennzeichnet, daß Signale von einer Mehrzahl von Wandlereingängen überwacht werden, wobei das Vorhandensein oder Nichtvorhandensein von Nachschwingen mit vorbestimmter Amplitude im ausgewählten Abtastwert von von einem bestimmten Eingang empfangenen Signalen dazu benutzt wird, um zu bestimmen, ob ein Wandler an diesem Eingang anliegt.

## Revendications

1. Système de télémétrie acoustique comprenant au moins un transducteur électro-acoustique (20) dirigé vers la surface d'une matière dont le niveau est à déterminer, un émetteur (18) pour émettre des impulsions d'énergie électrique à haute fréquence pour exciter sélectivement chaque dit transducteur pour le faire émettre au moins un tir de son haute fréquence, un récepteur (26) recevant et amplifiant l'énergie électrique provenant dudit au moins un tir régénérée par ledit transducteur le temps d'une période ultérieure, le laps de temps après un tir avant la réception par ledit récepteur de l'énergie régénérée à partir d'un écho provenant de ladite surface étant proportionnel à la distance de l'origine de l'écho, le moyen de traitement de signal comprenant un moyen convertisseur analogique/numérique (24) pour échantillonner de manière répétée l'amplitude de sortie du signal provenant du récepteur à des intervalles définis et pour numériser les échantillons; un moyen de mémoire (8) pour mémoriser une séquence étendue d'échantillons numérisés ainsi produits relativement à au moins un tir et former à partir de là une base de données numériques décrivant le profil amplitude/temps du signal reçu avec une résolution dépendante des intervalles d'échantillonnage; un moyen pour utiliser le profil d'amplitude décrit par les données dans ladite base de données pour aider à isoler par rapport à un axe de temps une partie du signal de sortie produit par au moins un tir jugée correspondre le plus probablement à un écho voulu; et un moyen pour déterminer une mesure représentée par un écho dans ladite partie de l'axe de temps; caractérisé en ce que l'émetteur (18) et le récepteur (26) sont configurés de sorte que le récepteur (26) est saturé par l'énergie électrique provenant de chaque impulsion provenant dudit émetteur (18) et en ce que ladite séquence d'échantillons numérisés comporte une partie initiale dans laquelle le récepteur (26) est ainsi saturé.

2. Système selon la revendication 1, caractérisé par un moyen (RING) capable de tester l'amplitude d'un échantillon dérivé de ladite partie initiale, un intervalle prédéterminé après un tir, pour vérifier ainsi la présence de la sonnerie du transducteur (20).

3. Système selon la revendication 1 ou la revendication 2, caractérisé en ce que ledit moyen de mémoire (8) est adapté pour mémoriser des échantillons de la sortie de récepteur apparaissant durant ledit tir, et le récepteur (26) est saturable par l'émetteur (18).

4. Système selon l'une quelconque des revendications précédentes, caractérisé en ce que l'émetteur (18) est adapté pour émettre à la fois des impulsions plus courtes et des impulsions plus longues, et des moyens (24) sont fournis pour dériver des échantillons de ladite partie initiale de l'énergie régénérée par ledit transducteur (20) à partir d'une impulsion courte, et pour dériver des échantillons du reste de la réponse du récepteur à partir de l'énergie régénérée par ledit transducteur (20) à partir d'une impulsion plus longue.

5. Procédé de télémétrie acoustique dans lequel une impulsion d'énergie acoustique est émise par un transducteur (20) qui est aussi utilisé pour recevoir un écho réfléchi par la surface de la matière dont on désire détecter le niveau, et dans lequel un profil de la variation de la sortie du transducteur dans le temps suivant les impulsions est mémorisé et examiné afin de détecter l'écho, caractérisé en ce que le profil comporte une période suivant immédiatement l'émission de l'impulsion durant laquelle le transducteur (20) sonne à une amplitude élevée suite à l'émission de ladite impulsion.

6. Procédé selon la revendication 5, caractérisé en ce que la sortie du transducteur est amplifiée par un récepteur (26) avant l'examen, la gamme dynamique du récepteur étant telle que sa sortie est saturée durant l'émission de chaque impulsion, ce niveau fournissant un point de départ pour examiner le profil de l'écho pour détecter toute anomalie d'écho.

7. Procédé selon la revendication 5 ou 6, caractérisé en ce qu'un profil est obtenu en utilisant une impulsion émise étroite, et une première partie de ce profil est examinée pour détecter la présence d'une anomalie représentant l'écho, et si aucun écho n'est détecté dans ladite première partie, un autre profil est obtenu en utilisant une impulsion émise plus large, une première partie du profil de l'écho est rejetée, et le reste est examiné pour détecter la présence d'une anomalie représentant l'écho.

8. Procédé selon la revendication 7, caractérisé en ce que la sortie du transducteur après l'impulsion étroite est examinée en recherchant sur le profil de l'écho un renversement d'amplitude minimum déterminée.

9. Procédé selon l'une quelconque des revendications 5 à 8, caractérisé en ce que la sortie du transducteur est amplifiée par un récepteur (26) ayant une caractéristique de transfert logarithmique, la sortie du récepteur est numérisée pour former un fichier d'échantillons de données, l'autre profil tel que représenté par les échantillons est examiné pour former une courbe de référence par filtrage numérique des échantillons de données numérisées, la courbe de référence est décalée, par addition d'une constante à ses échantillons, au-dessus de la réponse de l'écho de manière à entrecouper l'anomalie d'écho la plus grande, et la première anomalie d'écho dans la réponse d'écho qui entrecoupe la courbe de référence est jugée être l'écho voulu.

10. Procédé selon la revendication 9, caractérisé en ce que la différence d'amplitude entre l'anomalie sélectionnée et l'anomalie la plus grande suivante est mémorisée comme paramètre représentant le degré d'assurance que l'anomalie d'écho correcte a été sélectionnée.

11. Procédé selon l'une quelconque des revendications 5 à 10, caractérisé en ce que l'amplitude de sonnerie d'un signal électrique généré par le transducteur (20) excité par ladite impulsion émise est testée suite à l'arrêt de l'impulsion émise pour vérifier le fonctionnement normal du transducteur.

12. Procédé selon la revendication 11, caractérisé en ce qu'une séquence d'échantillons de signaux provenant du transducteur (20) est numérisée et mémorisée, et dans lequel un échantillon depuis une position spécifique dans ladite séquence est testé pour vérifier l'amplitude de sonnerie du transducteur à ce point dans la séquence, l'échantillon étant sélectionné de manière à ce que l'amplitude de sonnerie d'un transducteur fonctionnel soit élevée comparée à tout signal de bruit anticipé.

13. Procédé selon la revendication 12, caractérisé en ce que les signaux provenant d'une pluralité d'entrées de transducteurs sont contrôlés, la présence ou l'absence de sonnerie d'amplitude prédéterminée dans l'échantillon sélectionné de signaux reçus d'une entrée particulière étant utilisée pour déterminer si un transducteur est présent à cette entrée.
